# EUROPÄISCHE PATENTSCHRIFT

(11) **EP 3 571 091 B1**
(45) Veröffentlichungstag und Bekanntmachung des Hinweises auf die Patenterteilung: **14.07.2021**
(21) Anmeldenummer: 17818496.6
(22) Anmeldetag: 11.12.2017
(51) Int. Cl.: B60R 1/00, G02B 27/01, G06T 15/04, G06T 15/10

(54) **VERFAHREN UND VORRICHTUNG ZUM DARSTELLEN EINER UMGEBUNG EINES FAHRZEUGES**
METHOD AND DEVICE FOR DISPLAYING THE SURROUNDINGS OF A VEHICLE
PROCÉDÉ ET DISPOSITIF DE REPRÉSENTATION DE L'ENVIRONNEMENT D'UN VÉHICULE

(30) Priorität: 23.01.2017 DE 102017201002
(43) Veröffentlichungstag der Anmeldung: 27.11.2019
(73) Patentinhaber: Robert Bosch GmbH, 70442 Stuttgart (DE)
(72) Erfinder: LIEPELT, David, 70376 Stuttgart (DE); CANO, Raphael, 70180 Stuttgart (DE); ESPARZA GARCIA, Jose Domingo, 70178 Stuttgart (DE)
(86) Internationale Anmeldenummer: PCT/EP2017/082255
(87) Internationale Veröffentlichungsnummer: WO 2018/133997

(56) Entgegenhaltungen:
- WO-A1-2015/194501
- DE-T5-112013 002 636
- US-A1- 2014 278 065

## Beschreibung

### Stand der Technik

Die vorliegende Erfindung betrifft ein Verfahren und eine Vorrichtung zum Darstellen einer Umgebung eines Fahrzeuges.

In Fahrzeugen wird einem Fahrer des Fahrzeuges oftmals eine Darstellung der Umgebung des Fahrzeuges bereitgestellt. Dabei kann es erforderlich sein, dem Fahrer zusätzliche Information bereitzustellen. So werden dem Fahrer beispielsweise Informationen bezüglich verfügbarer Parkplätze bereitgestellt. In Fahrzeugen existieren unterschiedliche Systeme, die dazu geeignet sind, freie Parkplätze zu erkennen. Dazu gehören beispielsweise Ultraschallsysteme, Kamerasysteme, Radarsysteme und Lidarsysteme.

Solche zusätzliche Information, beispielsweise eine Markierung eines freien Parkplatzes, wird typischerweise in eine virtuelle oder schematische Wiedergabe der Umgebung eingeblendet. Dabei ist eine Zuordnung eines Punktes in der Wiedergabe der Umgebung, beispielsweise der Lage des erkannten Parkplatzes, zu der tatsächlichen Umgebung des Fahrzeuges oftmals schwierig. Die Dokumente US 2014/278065 A1, DE 11 2013 002636 T5, WO 2015/194501 A1 stellen Beispiele für den relevanten Stand der Technik dar.

### Offenbarung der Erfindung

Die Erfindung betrifft ein Verfahren gemäß Anspruch 1 und eine Vorrichtung gemäß Anspruch 6.

Das erfindungsgemäße Verfahren zum Darstellen einer Umgebung eines Fahrzeuges umfasst ein Aufspannen einer virtuellen Projektionsfläche in einem virtuellen Raum, welcher die Umgebung des Fahrzeuges repräsentiert, ein Texturieren der virtuellen Projektionsfläche durch ein Kamerabild, welches durch eine an dem Fahrzeug angeordnete Kamera erfasst wurde, ein Bestimmen einer Zielposition in dem virtuellen Raum, die einer Objektposition in der Umgebung des Fahrzeugs entspricht, an der ein virtuelles Objekt in der Darstellung der Umgebung des Fahrzeuges abgebildet werden soll, ein Erzeugen einer Objekttextur auf der virtuellen Projektionsfläche, welche das virtuelle Objekt in einer verzerrten Darstellung darstellt, in der das virtuelle Objekt eine entsprechende Verzerrung aufweist, die ein auf der virtuellen Projektionsfläche abgebildetes Objekt aufweist, wenn dieses sich an der Objektposition 7 befindet, und ein Abbilden der virtuellen Projektionsfläche aus Sicht einer ersten virtuellen Kamera, welche in dem virtuellen Raum angeordnet ist, in einem virtuellen Kamerabild.

Die erfindungsgemäße Vorrichtung zum Darstellen einer Umgebung eines Fahrzeuges umfasst eine Kameraschnittstelle, um Kamerabilder einer an dem Fahrzeug angeordneten Kamera zu empfangen, eine Ausgabeschnittstelle, um die Darstellung der Umgebung des Fahrzeuges für eine Anzeigevorrichtung bereitzustellen, und eine Recheneinheit. Die Recheneinheit ist dazu eingerichtet, eine virtuelle Projektionsfläche in einem virtuellen Raum aufzuspannen, welcher die Umgebung des Fahrzeuges repräsentiert, die virtuelle Projektionsfläche durch ein Kamerabild zu texturieren, welches über die Kameraschnittstelle empfangen wurde, eine Zielposition in dem virtuellen Raum zu bestimmen, die einer Objektposition in der Umgebung des Fahrzeuges entspricht, an der ein virtuelles Objekt in der Darstellung der Umgebung des Fahrzeuges abgebildet werden soll, eine Objekttextur auf der virtuellen Projektionsfläche zu erzeugen, welche das virtuelle Objekt in einer verzerrten Darstellung darstellt, in der das virtuelle Objekt eine entsprechende Verzerrung aufweist, die ein auf der virtuellen Projektionsfläche abgebildetes Objekt aufweist, wenn dieses sich an der Objektposition befindet, und die virtuelle Projektionsfläche aus Sicht einer ersten virtuellen Kamera in einem virtuellen Kamerabild abzubilden, wobei die virtuelle Kamera in dem virtuellen Raum angeordnet ist, und das virtuelle Kamerabild an der Ausgabeschnittstelle bereitzustellen.

Die virtuelle Projektionsfläche ist eine Fläche, welche insbesondere einen Punkt in dem virtuellen Raum umläuft, welcher einer Position des Fahrzeuges in der tatsächlichen Welt entspricht. Dabei weist die virtuelle Projektionsfläche bevorzugt die Form einer Schüssel auf, wobei der Punkt, welcher der tatsächlichen Position des Fahrzeugs in der tatsächlichen Welt entspricht, innerhalb der Schüssel liegt. So wird das Fahrzeug beispielsweise als ein Modell in dem virtuellen Raum dargestellt. Dabei befindet sich das Modell auf einem Boden der schüsselförmigen virtuellen Projektionsfläche und wird von den Wänden der Schüssel umlaufen.

Das Kamerabild, welches durch die an dem Fahrzeug angeordnete Kamera erfasst wurde, erfasst zumindest einen Teilbereich der Umgebung des Fahrzeuges in dem Kamerabild. Bei dem Texturieren der virtuellen Projektionsfläche wird das Kamerabild auf die virtuelle Projektionsfläche gelegt. Dabei wird das Kamerabild so verzerrt, dass Objekte, welche in dem Kamerabild abgebildet sind, derart auf der virtuellen Projektionsfläche abgebildet werden, dass diese aus Sicht der dem Fahrzeug zugehörigen Position in dem virtuellen Raum entsprechend der Lage der zugehörigen tatsächlichen Objekte aus Sicht des Fahrzeuges dargestellt werden.

Die Zielposition in dem virtuellen Raum entspricht der Objektposition in der Umgebung des Fahrzeuges. Dabei entspricht die Objektposition insbesondere einem Punkt in der Umgebung des Fahrzeuges, welcher markiert werden soll. So ist die Objektposition beispielsweise die Position eines freien Parkplatzes. Das virtuelle Objekt ist daher insbesondere dazu geeignet, einen Punkt aus der Umgebung, also aus der realen Welt, in der Darstellung der Umgebung zu markieren.

Die Objekttextur ist eine Textur, welche auf die virtuelle Projektionsfläche gelegt wird. Dabei überlagert die Objekttextur die Textur der virtuellen Projektionsfläche, welche durch das Kamerabild bereitgestellt wurde. Das virtuelle Objekt wird somit durch die Objekttextur in einer solchen Verzerrung auf der virtuellen Projektionsfläche abgebildet, die auch ein auf der virtuellen Projektionsfläche abgebildetes Objekt aufweist, wenn dieses sich an der Objektposition befindet. Das bedeutet mit anderen Worten, dass das virtuelle Objekt so dargestellt wird, als ob dieses sich als tatsächliches Objekt in der Umgebung des Fahrzeuges befinden würde und von der Kamera in dem Kamerabild erfasst wurde, um als Textur auf die virtuelle Projektionsfläche gelegt zu werden.

Die virtuelle Kamera ist keine tatsächliche Kamera, sondern lediglich ein Punkt in dem virtuellen Raum, welcher eine Berechnungsgrundlage für das Berechnen einer Ansicht des virtuellen Raums genutzt wird. Der virtuelle Raum ist kein tatsächlicher Raum, sondern lediglich ein mathematisches Konstrukt.

Abhängig von einer Anzahl verfügbarer an dem Fahrzeug angeordneter Kameras erfolgt das Texturieren der virtuellen Projektionsfläche durch Kamerabilder mehrerer an dem Fahrzeug angeordneter Kameras.

Es wird somit eine moderne Ansicht geschaffen, welche die ästhetischen Möglichkeiten nutzt, welche insbesondere durch eine GPU (Graphic Processing Unit) bereitgestellt werden. Somit werden zusätzliche Informationen für den Fahrer des Fahrzeuges auf intuitive Weise dargestellt. Das Verfahren lässt sich für eine vorteilhafte Darstellung insbesondere in konventionelle 3D-Surround-View-Systeme integrieren. Insbesondere in Systemen, bei denen eine auf dem virtuellen Objekt basierende Auswahl von Punkten in der Umgebung des Fahrzeuges erfolgen soll, beispielsweise die Auswahl eines verfügbaren Parkplatzes, wird eine bessere Zuordnung von tatsächlichen Positionen in der Umgebung des Fahrzeuges zu Positionen in dem virtuellen Raum ermöglicht. Das virtuelle Objekt fügt sich somit besonders gut in das virtuelle Kamerabild der ersten virtuellen Kamera und die darin dargestellten tatsächlichen Objekte ein.

Die erfindungsgemäße Vorrichtung weist alle Vorteile des erfindungsgemäßen Verfahrens auf.

Das Verfahren umfasst ferner ein Prüfen, ob die Zielposition in dem virtuellen Raum aus Sicht der ersten virtuellen Kamera vor oder hinter der virtuellen Projektionsfläche liegt, wobei das Erzeugen der Objekttextur auf der virtuellen Projektionsfläche erfolgt, wenn die Zielposition in dem virtuellen Raum aus Sicht der ersten virtuellen Kamera hinter der virtuellen Projektionsfläche liegt. Diese Situation wird nicht durch den Gegenstand des Anspruchs 1 abgedeckt. Dadurch wird erreicht, dass das virtuelle Objekt als Objekttextur in dem virtuellen Kamerabild der ersten virtuellen Kamera sichtbar ist, auch wenn dieses eigentlich aus Sicht der ersten virtuellen Kamera durch die virtuelle Projektionsfläche verdeckt wird, wenn es als eigenständiges Objekt in dem virtuellen Raum aufgespannt würde.

Gemäß der Erfindung, wenn das virtuelle Objekt als ein eigenständiges Objekt in dem virtuellen Raum aufgespannt wird, wenn die Zielposition in dem virtuellen Raum aus Sicht der ersten virtuellen Kamera vor der virtuellen Projektionsfläche liegt, wobei das eigenständige Objekt in dem virtuellen Kamerabild abgebildet wird. Somit wird gewährleistet, dass das virtuelle Objekt besonders plastisch dargestellt werden kann, falls dieses aus Sicht der ersten virtuellen Kamera vor der virtuellen Projektionsfläche liegt. In beiden Situationen, also unabhängig davon, ob die Zielposition in dem virtuellen Raum aus Sicht der ersten virtuellen Kamera vor oder hinter der virtuellen Projektionsfläche liegt, kann das virtuelle Objekt, welches sich an der Zielposition befindet, so dargestellt werden, dass dieses eine ähnliche Verzerrung aufweist, wie unmittelbar benachbarte Objekte. Es werden somit unterschiedliche geometrische Verzerrungen von Objekten vermieden, welche in dem virtuellen Kamerabild benachbart dargestellt werden. Damit kann eine Irritation des Betrachters vermieden werden.

Auch ist es vorteilhaft, wenn das virtuelle Objekt zu jedem Zeitpunkt als ein eigenständiges Objekt in dem virtuellen Raum aufgespannt wird. Gemäß der Erfindung werden nur solche Abschnitte des als eigenständiges Objekt aufgespannten virtuellen Objekts von der ersten virtuellen Kamera in dem ersten virtuelle Kamerabild dargestellt, welche aus Sicht der ersten virtuellen Kamera vor der virtuellen Projektionsfläche liegen. Das virtuelle Objekt tritt somit bei einer Bewegung der Zielposition in dem virtuellen Raum langsam aus der virtuellen Projektionsfläche hervor und geht im Übrigen in die Objekttextur über.

Ebenfalls gemäß der Erfindung, wenn bei einer Bewegung der Zielposition in dem virtuellen Raum ein Zeitpunkt erkannt wird, zu dem die Zielposition auf der virtuellen Projektionsfläche liegt, und zu diesem Zeitpunkt eine Übergangsanimation dargestellt wird, in welcher die Objekttextur auf der virtuellen Projektionsfläche in das eigenständige Objekt übergeht. Die Zielposition kann sich in dem virtuellen Raum beispielsweise dadurch ändern, dass sich das Fahrzeug in der Umgebung bewegt. Die zu markierende Objektposition in der Umgebung des Fahrzeuges bleibt zugleich unverändert. Dadurch kommt es zu einer relativen Bewegung der Objektposition gegenüber der Position des Fahrzeuges. Somit bewegt sich auch die Zielposition in dem virtuellen Raum. Dabei kann es dazu kommen, dass die Zielposition und mit ihr das virtuelle Objekt von einer Position, welche aus Sicht der ersten virtuellen Kamera hinter der virtuellen Projektionsfläche liegt, zu einer Position bewegt wird, die in dem virtuellen Raum aus Sicht der ersten virtuellen Kamera vor der virtuellen Projektionsfläche liegt. Somit wird die Zielposition und damit das virtuelle Objekt durch die Projektionsfläche hindurchbewegt. Dabei ändert sich die Darstellungsweise des virtuellen Objektes da dieses zunächst durch die Objekttextur dargestellt wird und dann als abgebildetes eigenständiges Objekt in dem virtuellen Kamerabild dargestellt wird. Damit das virtuelle Objekt seine Darstellungsweise nicht sprungartig ändert, ist es vorteilhaft, eine Animation, hier als Übergangsanimation bezeichnet, darzustellen, in welcher die Darstellung des virtuellen Objekts fließend von einer ersten Darstellung als Objekttextur zu einer zweiten Darstellung als eigenständiges Objekt übergeht. Es wird somit vermieden, dass die Darstellung der Umgebung des Fahrzeuges sich sprunghaft ändert und der Betrachter irritiert wird.

Ferner ist es vorteilhaft, wenn bei dem Erzeugen der Objekttextur auf der virtuellen Projektionsfläche das virtuelle Objekt an der Zielposition in dem virtuellen Raum aufgespannt wird und dieses mittels einer zweiten virtuellen Kamera erfasst wird, um die Objekttextur zu erzeugen, wobei sich die zweite virtuelle Kamera an einer Position in dem virtuellen Raum befindet, die einer Position der an dem Fahrzeug angeordneten Kamera entspricht. Dabei ist es auch möglich, dass das virtuelle Objekt in einem weiteren virtuellen Raum an der Zielposition aufgespannt wird, welcher dem virtuellen Raum entspricht, wobei in dem weiteren virtuellen Raum keine virtuelle Projektionsfläche angeordnet ist. Da ein virtueller Raum lediglich ein mathematisches Konstrukt ist, ist dies unerheblich, solange die aus Sicht der zweiten virtuelle Kamera erstellten Bilder in den virtuellen Raum übertragen werden können. Es wird somit eine Situation simuliert, welche einen Zustand abbildet, in der sich das virtuelle Objekt als tatsächliches Objekt in der Umgebung des Fahrzeuges befindet, und in der das virtuelle Objekt von der an dem Fahrzeug angeordneten Kamera erfasst wird. Wird die Objekttextur auf diese Weise erzeugt, so kann das von der zweiten virtuellen Kamera erfasste Bild in gleicher Weise behandelt, beispielsweise verzerrt werden, wie dieses auch mit dem durch die Kamera erfassten Kamerabild geschieht. Die notwendige Verzerrung der Darstellung des virtuellen Objektes kann somit auf einfache Weise präzise ermittelt werden.

Ferner ist es vorteilhaft, wenn eine Form der virtuellen der Projektionsfläche an eine Lage von Objekten im Umfeld des Fahrzeuges angepasst wird. Dazu wird das Umfeld des Fahrzeuges bevorzugt durch eine Fahrzeugsensorik erfasst, welche dazu geeignet ist, Informationen bezüglich einer Lage von Objekten in dem Umfeld des Fahrzeuges zu ermitteln. So wird insbesondere die virtuelle Projektionsfläche derart verformt, dass diese sich über erfasste Hindernisse legt, wenn diese in den virtuellen Raum übertragen werden.

Auch ist es vorteilhaft, wenn das virtuelle Objekt in der Objekttextur in einer andern Farbe, Musterung und/oder Deckkraft dargestellt wird, als wenn dieses als eigenständiges Objekt aufgespannt wird. Somit kann zwischen den Darstellungsweisen des virtuellen Objekts unterschieden werden und es werden Irritationen vermieden, wenn das virtuelle Objekt als eigenständiges Objekt aus der virtuellen Projektionsfläche heraustritt.

Bevorzugt ist die Recheneinheit ferner dazu eingerichtet ist zu Prüfen, ob die Zielposition in dem virtuellen Raum aus Sicht der ersten virtuellen Kamera vor oder hinter der virtuellen Projektionsfläche liegt, wobei das Erzeugen der Objekttextur auf der virtuellen Projektionsfläche erfolgt, wenn die Zielposition in dem virtuellen Raum aus Sicht der ersten virtuellen Kamera hinter der virtuellen Projektionsfläche liegt.

Es ist in jedem Falle vorteilhaft, wenn die Recheneinheit dazu eingerichtet ist, das erfindungsgemäße Verfahren zu steuern und/oder auszuführen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Ablaufdiagramm des erfindungsgemäßen Verfahrens zum Darstellen einer Umgebung eines Fahrzeuges gemäß einer ersten Ausführungsform der Erfindung,
- Figur 2: eine Darstellung des virtuellen Raums mit der darin angeordneten virtuellen Projektionsfläche,
- Figur 3: eine Darstellung eines Fahrzeuges in einer beispielhaften Umgebung, welches eine erfindungsgemäße Vorrichtung zum Darstellen einer Umgebung eines Fahrzeuges umfasst,
- Figur 4: eine Darstellung des virtuellen Raums mit der darin befindlichen texturierten virtuellen Projektionsfläche, und
- Figur 5: zwei beispielhafte virtuelle Kamerabilder, welche durch das Verfahren zum Darstellen der Umgebung des Fahrzeuges gemäß der ersten Ausführungsform der Erfindung erzeugt wurden.

### Ausführungsformen der Erfindung

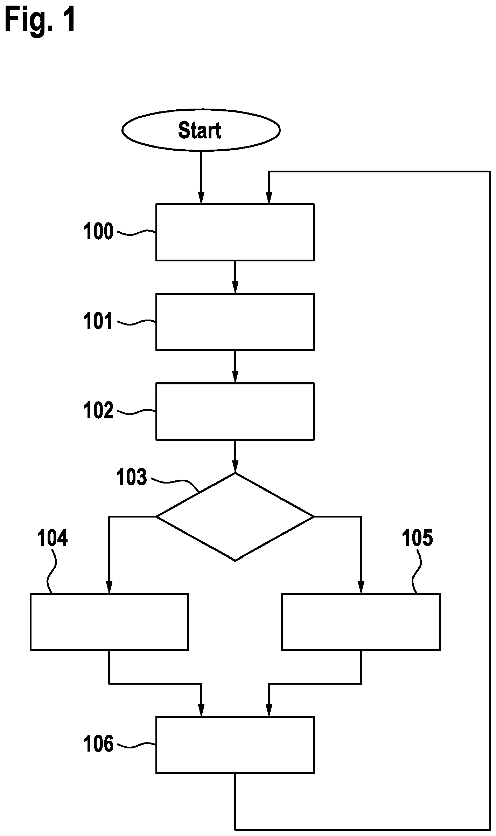

Figur 1 zeigt ein Ablaufdiagramm des erfindungsgemäßen Verfahrens zum Darstellen einer Umgebung 2 eines Fahrzeuges 1 gemäß einer ersten Ausführungsform der Erfindung. Das Verfahren wird von einer erfindungsgemäßen Vorrichtung zum Darstellen der Umgebung 2 des Fahrzeuges 1 ausgeführt.

Das Verfahren wird dadurch angestoßen, dass die Vorrichtung in Betrieb genommen wird, insbesondere dadurch, dass ein Benutzer eine Darstellung der Umgebung 2 des Fahrzeuges 1 anfordert.

Es wird zunächst ein erster Verfahrensschritt 100 ausgeführt. In dem ersten Verfahrensschritt 100 erfolgt ein Aufspannen einer virtuellen Projektionsfläche 21 in einem virtuellen Raum 20, welcher die Umgebung 2 des Fahrzeuges 1 repräsentiert. Dies erfolgt mittels einer Recheneinheit 10, welche in dem Fahrzeug 1 angeordnet ist. Der virtuelle Raum 20 ist dabei ein mathematisches Konstrukt. Dabei ist jedem Punkt in dem virtuellen Raum 20 ein tatsächlicher Punkt in der Umgebung 2 des Fahrzeuges 1 zugeordnet.

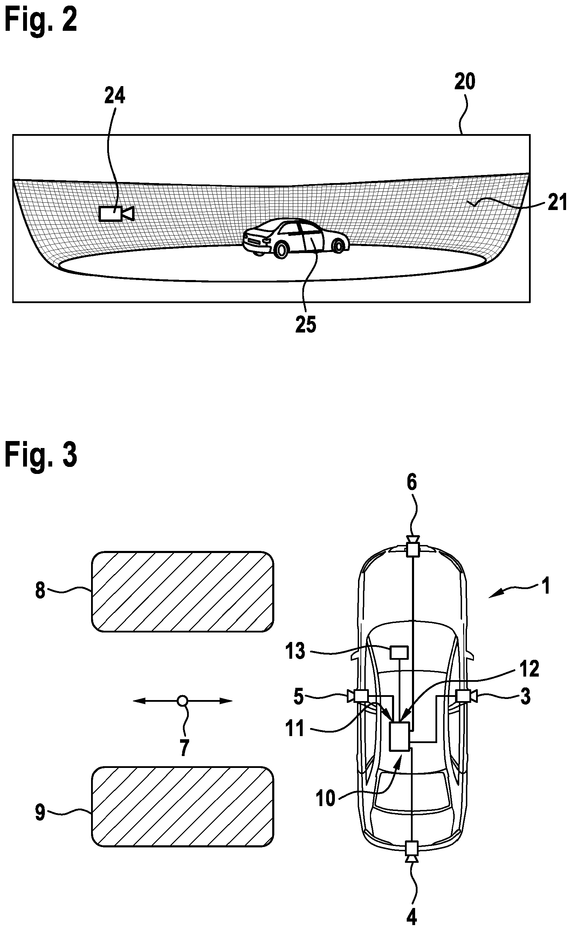

Der virtuelle Raum 20 ist beispielhaft in Figur 3 dargestellt. In einem Zentrum des virtuellen Raums 2 ist ein Modell 25 des Fahrzeuges 1 angeordnet. Das Modell 25 ist dabei an einer Position in dem virtuellen Raum 20 angeordnet, die einer Position des tatsächlichen Fahrzeuges 1 in der realen Welt entspricht. Die Position des Models 25 ist dabei ein Bezugspunkt des virtuellen Raums. Alle Punkte aus der tatsächlichen Umgebung werden basierend auf einer relativen Lage gegenüber dem Fahrzeug 1 beschrieben und diesen ist entsprechend basierend auf einer relativen Lage gegenüber dem Model 25 des Fahrzeuges ein Punkt in dem virtuellen Raum zugehörig. Die virtuelle Projektionsfläche 21 weist die Form einer Schüssel auf. Dabei entspricht ein Boden der schüsselförmigen virtuellen Projektionsfläche 21 einer Fahrbahnoberfläche, auf welcher sich das Fahrzeug 1 befindet. Eine Wandung der Schüssel umläuft das Modell 25.

Nachdem die virtuelle Projektionsfläche 21 in dem ersten Verfahrensschritt 100 bereitgestellt wurde, wird ein zweiter Verfahrensschritt 101 ausgeführt. In dem zweiten Verfahrensschritt 101 erfolgt ein Texturieren der virtuellen Projektionsfläche 21 durch ein Kamerabild, welches durch eine an dem Fahrzeug angeordnete Kamera 3, 4, 5, 6 erfasst wurde.

Das Fahrzeug 1 mit der Vorrichtung zum Darstellen der Umgebung 2 des Fahrzeuges 1 ist in Figur 3 dargestellt. Das Fahrzeug 1 ist dabei in einer beispielhaften Umgebung 2 dargestellt. An dem Fahrzeug 1 sind eine erste Kamera 3, eine zweite Kamera 4, eine dritte Kamera 5 und eine vierte Kamera 6 angeordnet. Dabei ist die erste Kamera 3 an einer rechten Seite des Fahrzeuges 1 angeordnet, die zweite Kamera 4 ist an einem Heck des Fahrzeuges 1 angeordnet, die dritte Kamera 5 ist an einer linken Seite des Fahrzeuges 1 angeordnet und die vierte Kamera 6 ist an einer Front des Fahrzeuges 1 angeordnet. Die erste bis vierte Kamera 3, 4, 5, 6 sind jeweils mit einer Weitwinkellinse ausgerüstet und erfassen zusammen eine 360°-Rundumansicht der Umgebung 2 des Fahrzeugs 1. Die Umgebung 2 des Fahrzeuges 1 wird somit vollständig durch die erste bis vierte Kamera 3, 4, 5, 6 erfasst. Die erste bis vierte Kamera 3, 4, 5, 6 sind über eine Kameraschnittstelle 1 mit der Recheneinheit 10 verbunden.

Von den Kameras 3, 4, 5, 6 werden kontinuierlich Kamerabilder erfasst und an die Recheneinheit 10 übertragen. Die Kamerabilder werden von der Recheneinheit 10 als Textur auf die virtuelle Projektionsfläche 21 gelegt. Dabei werden die Kamerabilder derart verzerrt und auf der virtuellen Projektionsfläche 21 angeordnet, dass ein in dem Kamerabild abgebildetes Objekt aus der Umgebung 2 des Fahrzeuges 1 so auf der virtuellen Projektionsfläche 21 erscheint, dass dieses aus Sicht des Modells 25 des Fahrzeuges entsprechend seiner tatsächlichen Position in der Umgebung 2 des Fahrzeuges 1 auf der virtuellen Projektionsfläche 21 abgebildet ist.

Nach dem zweiten Verfahrensschritt 101 wird ein dritter Verfahrensschritt 102 ausgeführt. In dem dritten Verfahrensschritt 102 erfolgt ein Bestimmen einer Zielposition 22 in dem virtuellen Raum 20, die einer Objektposition 7 in der Umgebung des Fahrzeuges 1 entspricht, an der ein virtuelles Objekt 23 in der Darstellung der Umgebung 2 des Fahrzeuges 1 abgebildet werden soll. So soll in dieser beispielhaften Ausführungsform der Erfindung durch das virtuelle Objekt 23 ein Stellplatz, also ein für das Fahrzeug 1 geeigneter Parkplatz, in der Darstellung der Umgebung 2 des Fahrzeuges 1 markiert werden. Bei dem Bestimmen der Zielposition 22 wird daher zunächst die Lage des Stellplatzes in der realen Welt gegenüber dem Fahrzeug 1 ermittelt. Diese Position wird als Objektposition 7 bezeichnet.

In Figur 3 ist die Objektposition 7 beispielhaft links neben dem Fahrzeug 1 gewählt. Die Objektposition 7 liegt dabei zwischen einem ersten parkenden Fahrzeug 8 und einem zweiten parkenden Fahrzeug 9 und markiert einen Stellplatz, welcher zwischen den parkenden Fahrzeugen 8, 9 liegt. Die Objektposition 7, also beispielsweise die Lage eines Stellplatzes, wird bevorzugt mittels einer Fahrzeugsensorik ermittelt. So wird beispielsweise die Umgebung 2 des Fahrzeuges 1 durch Ultraschallsensoren abgetastet, um zu erkennen, ob ein verfügbarer Stellplatz in der Umgebung 2 des Fahrzeuges 1 liegt. Alternativ oder zusätzlich umfasst die Fahrzeugsensorik weitere Sensoren, beispielsweise Radarsensoren, Lidarsensoren oder auch Kameras, beispielsweise die an dem Fahrzeug angeordneten Kameras 3, 4, 5, 6. Da jedem Punkt in dem virtuellen Raum 20 ein Punkt in der Umgebung 2 des Fahrzeuges 1 zugeordnet ist, ist auch der Objektposition 7 ein Punkt in dem virtuellen Raum 10 zugeordnet. Diese Position wird als Zielposition 22 bezeichnet.

Nach dem dritten Verfahrensschritt 102 wird ein vierter Verfahrensschritt 103 ausgeführt. In dem vierten Verfahrensschritt 103 erfolgt ein Prüfen, ob die Zielposition 22 in dem virtuellen Raum 20 aus Sicht einer ersten virtuellen Kamera 24 vor oder hinter der virtuellen Projektionsfläche 21 liegt. Die virtuelle Kamera 24 ist keine tatsächliche Kamera, sondern ein Punkt in dem virtuellen Raum 20, der eine Basis für eine Rechnung einer Ansicht des virtuellen Raums 20 darstellt. Wird beispielsweise eine Darstellung der Umgebung 2 des Fahrzeuges 1 aus einer Vogelperspektive angefordert, so wird die virtuelle Kamera 24 über das Modell 25 des Fahrzeuges 1 bewegt und eine Blickrichtung der ersten virtuellen Kamera 24 wird nach unten gerichtet. Die Umgebung 2 des Fahrzeuges 1 kann auf diese Weise aus vielen Betrachtungspunkten dargestellt werden, welche auch außerhalb des Fahrzeuges 1 liegen können. In dieser beispielhaften Ausführungsform der Erfindung befindet sich die virtuelle Kamera 24 innerhalb der schüsselförmigen virtuellen Projektionsfläche 21, also im Umfeld des Modells 25 des Fahrzeuges 1.

Das Prüfen, ob die Zielposition 22 in dem virtuellen Raum 20 aus Sicht der ersten virtuellen Kamera 24 vor oder hinter der virtuellen Projektionsfläche 21 liegt, erfolgt beispielsweise dadurch, dass die Zielposition 22 über eine Gerade mit der Position der ersten virtuellen Kamera 24 verbunden wird. Schneidet diese Gerade zwischen der Zielposition 22 und der Position der ersten virtuellen Kamera 24 die virtuelle Projektionsfläche 21, so liegt die Zielposition 22 aus Sicht der ersten virtuellen Kamera 24 hinter der virtuellen Projektionsfläche 21. Ist dies nicht der Fall, so liegt die Zielposition 22 aus Sicht der ersten virtuellen Kamera 24 vor der virtuellen Projektionsfläche 21. Abhängig davon, ob die Zielposition 22 in dem virtuellen Raum 20 aus Sicht der ersten virtuellen Kamera 24 vor oder hinter der virtuellen Projektionsfläche 21 liegt, wird das virtuelle Objekt 23 in unterschiedlicher Weise in dem virtuellen Raum 20 wiedergegeben.

Das virtuelle Objekt 23 sei hier beispielhaft ein dreidimensionales Modell des Buchstabens P, durch welchen der verfügbare Stellplatz markiert werden soll. Das virtuelle Objekt 23 soll so in der Umgebung 2 des Fahrzeuges 1 erscheinen, dass dieses in der Darstellung der Umgebung 2 des Fahrzeuges 1 auf dem freien Stellplatz steht. Es ist offensichtlich, dass ein beliebiges dreidimensionales Modell gewählt werden kann und dass das Modell daran angepasst werden kann, was in der Darstellung der Umgebung des Fahrzeuges markiert oder indiziert werden soll.

Es wird zunächst angenommen, dass die Zielposition 22 in dem virtuellen Raum 20 aus Sicht der ersten virtuellen Kamera 24 hinter der virtuellen Projektionsfläche 21 liegt. In diesem Fall wird ein fünfter Verfahrensschritt 104 ausgeführt.

In dem fünften Verfahrensschritt 104 erfolgt ein Erzeugen einer Objekttextur auf der virtuellen Projektionsfläche 21, welche das virtuelle Objekt 23 in einer verzerrten Darstellung darstellt, in der das virtuelle Objekt eine entsprechende Verzerrung aufweist, die ein auf der virtuellen Projektionsfläche 21 abgebildetes Objekt aufweist, wenn dieses sich an der Objektposition 7 befindet.

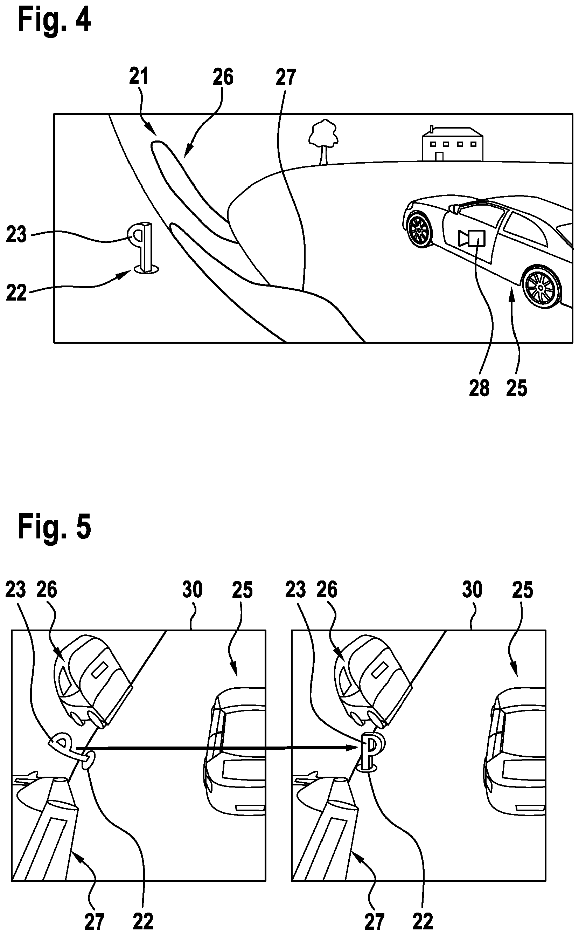

Eine Problematik, die sich daraus ergibt, dass die Zielposition 22 hinter der virtuellen Projektionsfläche 21 angeordnet ist, ist in Figur 4 dargestellt. Figur 4 zeigt eine Abbildung der texturierten virtuellen Projektionsfläche 21 in dem virtuellen Raum 20. Die virtuelle Kamera 24 ist in Figur 4 auf einer rechten Seite der virtuellen Projektionsfläche 21 angeordnet. Die Zielposition 22 liegt außerhalb der schüsselförmigen virtuellen Projektionsfläche 21. Somit wäre auch das virtuelle Objekt 23 außerhalb der schüsselförmigen virtuellen Projektionsfläche 21 angeordnet, und würde somit aus Sicht der ersten virtuellen Kamera 24 durch die virtuelle Projektionsfläche 21 verdeckt. Es ist in Figur 4 ersichtlich, dass die virtuelle Projektionsfläche 21 mittels der von den an dem Fahrzeug 1 angeordneten Kameras 3, 4, 5, 6 texturiert ist. So ist in einem ersten Teilbereich 26 auf der virtuellen Projektionsfläche 21 das erste parkende Fahrzeug 8 abgebildet, welches von der dritten Kamera 5 in einem Kamerabild erfasst wurde. Ferner ist in einem zweiten Teilbereich 27 auf der virtuellen Projektionsfläche 21 das zweite parkende Fahrzeug 9 abgebildet, welches ebenfalls von der dritten Kamera 5 in dem Kamerabild erfasst würde. Der Stellplatz befindet sich zwischen den parkenden Fahrzeugen 8, 9, wobei dieser Bereich in dem virtuellen Raum 20 teilweise außerhalb der virtuellen Projektionsfläche 21 liegt. Würde das virtuelle Objekt 23 zentral auf der dem Stellplatz entsprechenden Position in dem virtuellen Raum 20 positioniert, so würde dies aus Sicht der ersten virtuellen Kamera 24 von der virtuellen Projektionsfläche 21 verdeckt und wäre in der Darstellung der Umgebung 2 des Fahrzeuges 1 nicht sichtbar. Das diese Problematik vorliegt, wurde jedoch in dem vierten Verfahrensschritt 103 erkannt.

Das virtuelle Objekt 23 wird daher in eine Objekttextur gewandelt. Um die Objekttextur zu erzeugen, wird die virtuelle Projektionsfläche 21 zunächst ausgeblendet. Eine zweite virtuelle Kamera 28 wird an eine Position in dem virtuellen Raum 20 bewegt, die der Position der dritten Kamera 5 an dem Fahrzeug 1 entspricht, durch welche auch der Stellplatz und somit die Objektposition 7 in dem Kamerabild erfasst wurde. Die zweite virtuelle Kamera 28 wird somit an einer linken Seite des Modells 25 des Fahrzeuges 1 angeordnet. Die zweite virtuelle Kamera 28 wird entsprechend einer Richtung ausgerichtet, welche auch einer Blickrichtung der an dem Fahrzeug 1 angeordneten dritten Kamera 5 entspricht. Aus einem Blickpunkt der zweiten virtuellen Kamera 28 wird das als dreidimensionales Objekt in dem virtuellen Raum 20 dargestellte virtuelle Objekt 23 erfasst. In dem von der zweiten virtuellen Kamera 28 erfassten Bild ist somit ausschließlich das virtuelle Objekt 23 abgebildet, wobei dieses aus einem bestimmten Blickwinkel abgebildet wird. Dieses von der zweiten virtuellen Kamera 28 erfasste Bild wird als Textur auf die virtuelle Projektionsfläche 21 gelegt, wobei das Bild der zweiten virtuellen Kamera 28 so verzerrt und auf der virtuellen Projektionsfläche 21 angeordnet wird, wie dies auch mit dem Kamerabild durchgeführt wurde, welches von der dritten Kamera 5 erfasst wurde. Der Bereich des Bildes der zweiten virtuellen Kamera 28, in dem das virtuelle Objekt 23 abgebildet ist, überlagert dabei die Texturierung der virtuellen Projektionsfläche 21, welche durch die Kamerabilder bereitgestellt wird. Wird das Kamerabild beispielsweise einer Koordinatentransformation unterzogen, um das Kamerabild für die Texturierung der virtuellen Projektionsfläche anzupassen, so wird diese Koordinatentransformation auch auf das Bild der zweiten virtuellen Kamera 28 angewendet. Für das weitere Vorgehen wird die virtuelle Projektionsfläche 21 wieder eingeblendet.

Es ist ersichtlich, dass ein Ein- und Ausblender der virtuellen Projektionsfläche 21 optional ist, und dass das Bild der zweiten virtuellen Kamera 28 auch in einem alternativen virtuellen Raum 20 berechnet werden kann und die Berechnung nicht zwingend in demselben virtuellen Raum 20 erfolgen muss, in dem die virtuelle Projektionsfläche 21 aufgespannt ist.

Die Objekttextur wird somit durch das Bild der zweiten virtuellen Kamera 28 bereitgestellt. Das virtuelle Objekt 23 wird somit bei dem Erzeugen der Objekttextur auf der virtuellen Projektionsfläche 21 an der Zielposition 22 in dem virtuellen Raum 20 aufgespannt und das virtuelle Objekt 23 wird mittels einer zweiten virtuellen Kamera 28 erfasst, um die Objekttextur zu erzeugen, wobei die zweite virtuelle Kamera 28 an einer Position in dem virtuellen Raum 20 angeordnet ist, die einer Position der an dem Fahrzeug 1 angeordneten dritten Kamera 5 entspricht. Dadurch, dass das virtuelle Objekt 23 dabei aus einem gleichen Blickwinkel erfasst wurde, wie dies auch mit einem tatsächlichen Objekt erfolgt wäre, welches an der Objektposition in der Umgebung 2 des Fahrzeuges 1 angeordnet ist, und dadurch, dass das Bild der zweiten virtuellen Kamera 28 in gleicher Weise verarbeitet wurde, wie das Bild der dritten Kamera 5, um das Bild der zweiten virtuellen Kamera 28 auf die virtuelle Projektionsfläche 21 zu legen, weist das virtuelle Objekt 23 bzw. dessen Abbildung, eine entsprechende Verzerrung auf, die ein auf der virtuellen Projektionsfläche 21 abgebildetes Objekt aufweist, wenn dieses sich an der Objektposition 7 befindet.

Wurde in dem vierten Verfahrensschritt 103 ermittelt, dass die Zielposition 22 in dem virtuellen Raum 20 aus Sicht der ersten virtuellen Kamera 24 vor der virtuellen Projektionsfläche 21 liegt, so wird ein sechster Schritt 105 ausgeführt. Es wird somit entweder der fünfte Verfahrensschritt 104 oder der sechste Verfahrensschritt 105 ausgeführt.

In dem sechsten Verfahrensschritt 105 wird das virtuelle Objekt 23 als ein eigenständiges Objekt in den virtuellen Raum 20 aufgespannt. Es wird somit neben dem Modell 25 des Fahrzeuges 1 ein weiteres dreidimensionales Objekt in dem virtuellen Raum angeordnet. Das virtuelle Objekt 23 ist somit ein eigenständiges Objekt, welches sich innerhalb der schüsselförmigen virtuellen Projektionsfläche 21 befindet. Das virtuelle Objekt 23 wird nicht durch die Objekttextur auf der virtuellen Projektionsfläche 21 dargestellt.

Nach dem fünften Verfahrensschritt 104 und dem sechsten Verfahrensschritt 105 erfolgt in beiden Fällen ein Ausführen eines siebten Verfahrensschrittes 106. in dem siebten Verfahrensschritt 106 erfolgt ein Abbilden der virtuellen Projektionsfläche 21 aus Sicht der ersten virtuellen Kamera 24, welche in dem virtuellen Raum 20 angeordnet ist. Das von der ersten virtuellen Kamera 24 bereitgestellte Kamerabild wird als virtuelles Kamerabild 30 bezeichnet. Es wird somit die virtuelle Projektionsfläche 21 mit der darauf befindlichen Textur und das Modell 25 des Fahrzeuges 1 aus Sicht der ersten virtuellen Kamera 24 abgebildet. Ob das virtuelle Objekt 23 sichtbar als eigenständiges Objekt aufgespannt und von der ersten virtuellen Kamera 24 erfasst wird, oder ob dieses durch die Objekttextur auf der virtuellen Projektionsfläche 21 dargestellt wird, hängt davon ab, zu welchem Ergebnis die in dem vierten Verfahrensschritt 103 ausgeführte Prüfung führte.

In Figur 5 ist auf der linken Seite ein erstes virtuelles Kamerabild 30 der ersten virtuellen Kamera 24 dargestellt, welches sich beispielhaft ergibt, wenn der fünfte Verfahrensschritt 104 ausgeführt wurde, also wenn die Zielposition 22 in dem virtuellen Raum 20 aus Sicht der ersten virtuellen Kamera 24 hinter der virtuellen Projektionsfläche 21 liegt und die Objekttextur auf der virtuellen Projektionsfläche 21 erzeugt wurde. Es ist ersichtlich, dass das virtuelle Objekt 23 eine Verzerrung aufweist. So ist ein vertikaler Balken des "P", welcher das virtuelle Objekt 23 darstellt, gekrümmt, wobei dieser in einem Maße gekrümmt ist, welches in etwa der Krümmung, also der Verzerrung in der Abbildung der parkenden Fahrzeuge 8, 9 entspricht. Da das virtuelle Objekt 23 nicht als eigenständiges Objekt aufgespannt wurde, bildet erste virtuelle Kamera 24 lediglich die texturierte virtuelle Projektionsfläche 21 und das Model 25 des Fahrzeugs 1, wobei das virtuelle Objekt 23 als Textur auf der virtuellen Projektionsfläche erscheint.

Das virtuelle Objekt 23 wird zu jedem Zeitpunkt als ein eigenständiges Objekt in dem virtuellen Raum 20 aufgespannt. Dies führt dazu, dass das als ein eigenständiges Objekt aufgespannte virtuelle Objekt 23 in einigen Situationen teilweise dargestellt wird, wenn dieses so in dem virtuellen Raum 20 angeordnet ist, dass es zu einer Überschneidung mit der virtuellen Projektionsfläche kommt. Wird die Zielposition verändert, so taucht das virtuelle Objekt 23 abschnittsweise in ein Inneres der schüsselförmigen Projektionsfläche 21 ein.

Auf der rechten Seite ist in Figur 5 ein beispielhaftes zweites virtuelles Kamerabild 30 dargestellt, welches sich ergibt, wenn bei dem Prüfen in dem vierten Verfahrensschritt 103 ermittelt wurde, dass die Zielposition 22 in dem virtuellen Raum 20 aus Sicht der ersten virtuellen Kamera 24 vor der virtuellen Projektionsfläche 21 liegt. In diesem Falle ist das virtuelle Objekt 23 ein eigenständiges dreidimensionales Objekt, wird also als ein eigenständiges Objekt in dem virtuellen Raum aufgespannt und so von der ersten virtuellen Kamera 24 in dem virtuellen Kamerabild 30 erfasst. Das "P" ist somit nicht verzerrt und weist beispielsweise einen geraden Balken auf. Die erste virtuelle Kamera 24 bildet daher das aufgespannte virtuelle Objekt 23, die texturierte virtuelle Projektionsfläche 21 und das Model 25 des Fahrzeugs 1.

Optional wird das virtuelle Objekt 23 in der Objekttextur in einer andern Farbe, Musterung und/oder Deckkraft dargestellt wird, als wenn dieses als eigenständiges Objekt aufgespannt wird. So kann das virtuelle Objekt 23 beispielsweise in einem helleren Farbton dargestellt werden, wenn dieses als Objekttextur dargestellt wird, als wenn dieses als eigenständiges Objekt dargestellt wird.

Das virtuelle Kamerabild 30 wird für eine Betrachtung durch einen Benutzer, insbesondere den Fahrer des Fahrzeuges 1, bereitgestellt. Dazu wird das virtuelle Kamerabild 30 über eine Ausgabeschnittstelle 12 von der Recheneinheit 10 an eine Anzeigevorrichtung 13 übertragen. Die Anzeigevorrichtung 13 ist ein Display im Inneren des Fahrzeuges 1. Auf diesem wird das virtuelle Kamerabild 30 dargestellt.

Nachdem der siebte Verfahrensschritt 106 ausgeführt ist, verzweigt das Verfahren zurück auf den ersten Verfahrensschritt 100 und wird fortan in einer Schleife ausgeführt. Insbesondere wenn sich das Fahrzeug 1 in Bewegung befindet, kann es vorkommen, dass sich die Zielposition 22 in dem virtuellen Raum 20 ebenfalls bewegt, da sowohl die Objektposition 7 als auch die Zielposition 22 Positionen sind, welche in Relation zu der Position des Fahrzeuges 1 ermittelt werden. Nähert sich das Fahrzeug 1 der Objektposition 1 an, so wandert auch die Zielposition 22 in dem virtuellen Raum 20 auf das Modell 25 des Fahrzeuges 1 zu. Es gibt somit einen Zeitpunkt, zu dem bei dem Prüfen, ob die Zielposition 22 in dem virtuellen Raum 20 aus Sicht der ersten virtuellen Kamera 24 vor oder hinter der Projektionsfläche 21 liegt, was in dem vierten Verfahrensschritt 103 erfolgt, ein Wechsel auftritt, bei dem nicht mehr auf den fünften Verfahrensschritt 104 verzweigt wird, sondern zu dem auf den sechsten Verfahrensschritt 105 verzweigt wird. Eine Darstellung des virtuellen Objekts 23 in der Darstellung der Umgebung 2 des Fahrzeuges 1 würde somit plötzlich wechseln. Um zu vermeiden, dass die Darstellung des virtuellen Objekts 23 aus der virtuellen Projektionsfläche 21 herausspringt, wird dieser Zeitpunkt erkannt und es wird eine Übergangsanimation dargestellt, in welcher die Objekttextur aus der virtuellen Projektionsfläche 21 in das eigenständige Objekt übergeht. Dies ist in Figur 5 durch einen Pfeil angedeutet.

In einem alternativen zusätzlichen Verfahrensschritt des Verfahrens, wird eine Form der virtuellen Projektionsfläche 21 an eine Lage von Objekten im Umfeld des Fahrzeuges 1 angepasst. So wird beispielsweise auf die zuvor beschriebene Fahrzeugsensorik zugegriffen, um die Lage von Hindernissen im Umfeld des Fahrzeuges 1 zu erkennen. Die Form der virtuellen Projektionsfläche 21 wird beispielsweise derart angepasst, dass die Projektionsfläche 21 sich über die in den virtuellen Raum 20 übertragenen Hindernisse legt. Es kann somit zu einer zusätzlichen Verzerrung in den Texturen kommen, welche auf die virtuelle Projektionsfläche 21 gelegt werden. Da das Erzeugen der Objekttextur auf der virtuellen Projektionsfläche 21 jedoch auf dem gleichen Algorithmus basiert, wie auch das Texturieren der virtuellen Projektionsfläche 21 durch das Kamerabild, wird das virtuelle Objekt 23 in dem fünften Verfahrensschritt 104 nach wie vor die entsprechende Verzerrung aufweisen, die auch ein auf der virtuellen Projektionsfläche 21 abgebildetes Objekt aufweist, wenn dieses sich an der Objektposition 7 befindet.

Zusammenfassend, basieren aktuelle 3D-Surround-View-Systeme auf einer Geometrie, in der eine Fläche und eine Wand, welche eine Schüssel bilden, zu der virtuellen Projektionsfläche 21 zusammengefügt werden. Da eine Position der Kameras 3, 4, 5, 6 an dem Fahrzeug 1 bekannt ist, beispielsweise durch eine extrinsische Kamerakalibration erfasst wird, können synthetische oder andere künstliche Objekte auf einfache Weise in der dreidimensionalen Szene, welche sich in dem virtuellen Raum 20 ergibt, dargestellt werden, solange diese innerhalb der Schüssel der virtuellen Projektionsfläche 21 angeordnet sind. Probleme können jedoch auftreten, wenn das virtuelle Objekt 23 außerhalb der Projektionsfläche 21 angeordnet ist und somit außerhalb der von dem Surround-View-System betrachtbaren Welt liegt. Auch wenn das virtuelle Objekt 23 die virtuelle Projektionsfläche 21 schneidet, kann dies zu Problemen führen. So kann das virtuelle Objekt 23 beispielsweise nur teilweise sichtbar sein.

Alternative Objekte, welche als virtuelles Objekt 23 dargestellt werden, sind zum Beispiel GPS-Richtungsangaben, eine Markierung für einen Point-Of-Interesst (POI) oder Ähnliches. Jedes beliebige Objekt kann als virtuelles Objekt 23 in die Ansicht des Surround-View-Systems eingefügt werden. Dadurch, dass die Objekttextur eine verzerrte Darstellung aufweist, in der das virtuelle Objekt 23 eine entsprechende Verzerrung aufweist, die ein auf der virtuellen Projektionsfläche 21 abgebildetes Objekt aufweist, wenn dieses sich an der Objektposition 7 befinden würde, wird sichergestellt, dass die Umgebung 2 des Fahrzeuges 1 und das virtuelle Objekt 23 basierend auf dem gleichen Projektionsmodell dargestellt werden. Dies wäre nicht der Fall, wenn das virtuelle Objekt 23 einfach auf die virtuelle Projektionsfläche 21 gelegt würde, ohne dass dieses verzerrt wird. In diesem Falle würden die Projektionsmodelle nicht zueinander passen und das Bild würde nicht natürlich aussehen.

Erfindungsgemäß werden somit zunächst echte Bilder der Umgebung 2 des Fahrzeuges 1 in den Kamerabildern der an dem Fahrzeug 1 angeordneten Kameras 3, 4, 5, 6 erfasst. Ferner wird die Objektposition 7 und die Zielposition 22 bestimmt. Bevor das virtuelle Kamerabild 30 der ersten virtuellen Kamera 24 errechnet wird, wird die Objekttextur berechnet, welche ein Overlay ist, und an einer korrekten 3D-Position darzustellen ist. Das virtuelle Objekt 23 wird aus Sicht der zweiten virtuellen Kamera 28 gerendert, welche an einer Position in dem virtuellen Raum 20 angeordnet ist, der einer Position der echten Kamera an dem Fahrzeug 1 entspricht. Das Ergebnis wird als Textur gespeichert, welche für das tatsächliche rendern der Ansicht der ersten virtuellen Kamera 24 in dem virtuellen Kamerabild 30 genutzt wird. Insbesondere können sichtbare Teile des virtuellen Objekts 23, die in die Schüsselform der virtuellen Projektionsfläche 21 eintreten, vollständig dargestellt werden. Teile des virtuellen Objekts 23, welche sich noch außerhalb der virtuellen Projektionsfläche 21 befinden, können beispielsweise gestrichelt oder schattiert dargestellt werden.

Bei dem Texturieren der virtuellen Projektionsfläche 21 mit den Kamerabildern erfolgt somit ein Vergleichen der Koordinaten der aktuellen Texturen mit den Koordinaten der Objekttextur. Sind die Koordinaten identisch, werden insbesondere beide Texturen dargestellt. Sind diese nicht identisch, werden nur die auf den Kamerabildern basierenden Texturen dargestellt.

Nebst oben stehender Offenbarung wird explizit auf die Offenbarung der Figuren 1 bis 5 hingewiesen.

## Patentansprüche

1. Verfahren zum Darstellen einer Umgebung (2) eines Fahrzeuges (1), umfassend:
- ein Aufspannen einer virtuellen Projektionsfläche (21) in einem virtuellen Raum (20), welcher die Umgebung (2) des Fahrzeuges (1) repräsentiert,
- ein Texturieren der virtuellen Projektionsfläche (21) durch ein Kamerabild, welches durch eine an dem Fahrzeug (1) angeordnete Kamera (3, 4, 5, 6) erfasst wurde,
- ein Bestimmen einer Zielposition (22) in dem virtuellen Raum (20), die einer Objektposition (7) in der Umgebung (2) des Fahrzeuges (1) entspricht, an der ein virtuelles Objekt (23) in der Darstellung der Umgebung (2) des Fahrzeuges (1) abgebildet werden soll,
- ein Erzeugen einer Objekttextur auf der virtuellen Projektionsfläche (21), welche das virtuelle Objekt (23) in einer verzerrten Darstellung darstellt, in der das virtuelle Objekt (23) eine entsprechende Verzerrung aufweist, die ein auf der virtuellen Projektionsfläche (21) abgebildetes Objekt aufweist, wenn dieses sich an der Objektposition (7) befindet,
- ein Prüfen, ob die Zielposition (22) in dem virtuellen Raum (20) aus Sicht der ersten virtuellen Kamera (24) vor oder hinter der virtuellen Projektionsfläche (21) liegt,
und
- ein Abbilden der virtuellen Projektionsfläche (21) aus Sicht einer ersten virtuellen Kamera (24), welche in dem virtuellen Raum (20) angeordnet ist, in einem virtuellen Kamerabild (30), wobei das virtuelle Objekt (23) als ein eigenständiges Objekt in dem virtuellen Raum (20) aufgespannt wird, wenn die Zielposition (22) in dem virtuellen Raum (20) aus Sicht der ersten virtuellen Kamera (24) vor der virtuellen Projektionsfläche (21) liegt, wobei das eigenständige Objekt in dem virtuellen Kamerabild (30) abgebildet wird,
**dadurch gekennzeichnet, dass**
bei einer Bewegung der Zielposition (22) in dem virtuellen Raum (20) ein Zeitpunkt erkannt wird, zu dem die Zielposition (22) auf der virtuellen Projektionsfläche (21) liegt, und zu diesem Zeitpunkt eine Übergangsanimation dargestellt wird, in welcher die Objekttextur auf der virtuellen Projektionsfläche (21) in das eigenständige Objekt übergeht.

2. Verfahren gemäß einem der voranstehenden Ansprüche, **dadurch gekennzeichnet, dass** das virtuelle Objekt (23) zu jedem Zeitpunkt als ein eigenständiges Objekt in dem virtuellen Raum (20) aufgespannt wird.

3. Verfahren gemäß einem der voranstehenden Ansprüche, **dadurch gekennzeichnet, dass** bei dem Erzeugen der Objekttextur auf der virtuellen Projektionsfläche (21) das virtuelle Objekt (23) an der Zielposition (22) in dem virtuellen Raum (20) aufgespannt wird und dieses mittels einer zweiten virtuellen Kamera (28) erfasst wird, um die Objekttextur zu erzeugen, wobei sich die zweite virtuelle Kamera (28) an einer Position in dem virtuellen Raum (20) befindet, die einer Position der an dem Fahrzeug (1) angeordneten Kamera (3, 4, 5, 6) entspricht.

4. Verfahren gemäß einem der voranstehenden Ansprüche, **dadurch gekennzeichnet, dass** eine Form der virtuellen Projektionsfläche (21) an eine Lage von Objekten im Umfeld des Fahrzeuges (1) angepasst wird.

5. Verfahren gemäß einem der voranstehenden Ansprüche, **dadurch gekennzeichnet, dass** das virtuelle Objekt (23) in der Objekttextur in einer andern Farbe, Musterung und/oder Deckkraft dargestellt wird, als wenn dieses als eigenständiges Objekt aufgespannt wird.

6. Vorrichtung zum Darstellen einer Umgebung (2) eines Fahrzeuges (1), umfassend:
- eine Kameraschnittstelle (11), um Kamerabilder einer an dem Fahrzeug (1) angeordneten Kamera (3, 4, 5, 6) zu empfangen,
- eine Ausgabeschnittstelle (12), um die Darstellung der Umgebung (2) des Fahrzeuges (1) für eine Anzeigevorrichtung (13) bereitzustellen, und
- eine Recheneinheit (10), welche dazu eingerichtet ist, die Schritte auszuführen:
• Aufspannen einer virtuellen Projektionsfläche (21) in einem virtuellen Raum (20), welcher die Umgebung (2) des Fahrzeuges (1) repräsentiert,
• Texturieren der virtuellen Projektionsfläche (21) durch ein Kamerabild, welches über die Kameraschnittstelle (11) empfangen wurde,
• Bestimmen einer Zielposition (22) in dem virtuellen Raum (20), die einer Objektposition (7) in der Umgebung (2) des Fahrzeuges (1) entspricht, an der ein virtuelles Objekt (23) in der Darstellung der Umgebung (2) des Fahrzeuges (1) abgebildet werden soll,
• Erzeugen einer Objekttextur auf der virtuellen Projektionsfläche (21), welche das virtuelle Objekt (23) in einer verzerrten Darstellung darstellt, in der das virtuelle Objekt (23) eine entsprechende Verzerrung aufweist, die ein auf der virtuellen Projektionsfläche (21) abgebildetes Objekt aufweist, wenn dieses sich an der Objektposition (7) befindet,
▪ Prüfen, ob die Zielposition (22) in dem virtuellen Raum (20) aus Sicht der ersten virtuellen Kamera (24) vor oder hinter der virtuellen Projektionsfläche (21) liegt, und Abbilden der virtuellen Projektionsfläche (21) aus Sicht einer ersten virtuellen Kamera (24), welche in dem virtuellen Raum (20) angeordnet ist, in einem virtuellen Kamerabild (30) und Bereitstellen des virtuellen Kamerabildes (30) an der Ausgabeschnittstelle (12), wobei das virtuelle Objekt (23) als ein eigenständiges Objekt in dem virtuellen Raum (20) aufgespannt wird, wenn die Zielposition (22) in dem virtuellen Raum (20) aus Sicht der ersten virtuellen Kamera (24) vor der virtuellen Projektionsfläche (21) liegt, wobei das eigenständige Objekt in dem virtuellen Kamerabild (30) abgebildet wird,
**dadurch gekennzeichnet, dass**
bei einer Bewegung der Zielposition (22) in dem virtuellen Raum (20) ein Zeitpunkt erkannt wird, zu dem die Zielposition (22) auf der virtuellen Projektionsfläche (21) liegt, und zu diesem Zeitpunkt eine Übergangsanimation dargestellt wird, in welcher die Objekttextur auf der virtuellen Projektionsfläche (21) in das eigenständige Objekt übergeht..

## Claims

1. Method for presenting a surrounding area (2) of a vehicle (1), comprising:
- spanning a virtual projection surface (21) in a virtual space (20), the latter representing the surrounding area (2) of the vehicle (1),
- texturizing the virtual projection surface (21) by way of a camera image, which was captured by a camera (3, 4, 5, 6) arranged at the vehicle (1),
- determining a target position (22) in the virtual space (20) corresponding to an object position (7) in the surrounding area (2) of the vehicle (1) at which a virtual object (23) is intended to be imaged in the presentation of the surrounding area (2) of the vehicle (1),
- generating an object texture on the virtual projection surface (21) presenting the virtual object (23) in a distorted presentation, in which the virtual object (23) has a corresponding distortion that an object imaged on the virtual projection surface (21) has if said object is located at the object position (7),
- checking whether the target position (22) in the virtual space (20) is located in front of or behind the virtual projection surface (21) from the perspective of the first virtual camera (24), and
- imaging the virtual projection surface (21) from the perspective of a first virtual camera (24), which is arranged in the virtual space (20), in a virtual camera image (30), wherein the virtual object (23) is spanned as a separate object in the virtual space (20) if the target position (22) in the virtual space (20) lies in front of the virtual projection surface (21) from the perspective of the first virtual camera (24), wherein the separate object is imaged in the virtual camera image (30),
**characterized in that**
a time point at which the target position (22) lies on the virtual projection surface (21) is identified in the case of a movement of the target position (22) in the virtual space (20), and at that time point a transition animation is presented, in which the object texture on the virtual projection surface (21) transitions into the separate object.

2. Method according to the preceding claim, **characterized in that** the virtual object (23) is spanned at every time point as a separate object in the virtual space (20).

3. Method according to either of the preceding claims, **characterized in that**, in the case of the generation of the object texture on the virtual projection surface (21), the virtual object (23) is spanned at the target position (22) in the virtual space (20) and is captured by means of a second virtual camera (28) in order to generate the object texture, wherein the second virtual camera (28) is located at a position in the virtual space (20) that corresponds to a position of the camera (3, 4, 5, 6) arranged at the vehicle (1).

4. Method according to one of the preceding claims, **characterized in that** a shape of the virtual projection surface (21) is adapted to a location of objects in the vicinity of the vehicle (1).

5. Method according to one of the preceding claims, **characterized in that** the virtual object (23) in the object texture is presented in a different colour, pattern and/or opacity than when it is spanned as a separate object.

6. Apparatus for presenting a surrounding area (2) of a vehicle (1), comprising:
- a camera interface (11) for receiving camera images of a camera (3, 4, 5, 6) arranged at the vehicle (1),
- an output interface (12) for providing the presentation of the surrounding area (2) of the vehicle (1) for a display apparatus (13), and
- a computing unit (10), which is configured to perform the steps of:
• spanning a virtual projection surface (21) in a virtual space (20), the latter representing the surrounding area (2) of the vehicle (1),
• texturizing the virtual projection surface (21) by way of a camera image, which was received via the camera interface (11),
• determining a target position (22) in the virtual space (20) corresponding to an object position (7) in the surrounding area (2) of the vehicle (1) at which a virtual object (23) is intended to be imaged in the presentation of the surrounding area (2) of the vehicle (1),
• generating an object texture on the virtual projection surface (21) presenting the virtual object (23) in a distorted presentation, in which the virtual object (23) has a corresponding distortion that an object imaged on the virtual projection surface (21) has if said object is located at the object position (7),
• checking whether the target position (22) in the virtual space (20) is located in front of or behind the virtual projection surface (21) from the perspective of the first virtual camera (24), and
• imaging the virtual projection surface (21) from the perspective of a first virtual camera (24), which is arranged in the virtual space (20), in a virtual camera image (30) and providing the virtual camera image (30) to the output interface (12), wherein the virtual object (23) is spanned as a separate object in the virtual space (20) if the target position (22) in the virtual space (20) lies in front of the virtual projection surface (21) from the perspective of the first virtual camera (24), wherein the separate object is imaged in the virtual camera image (30),
**characterized in that**
a time point at which the target position (22) lies on the virtual projection surface (21) is identified in the case of a movement of the target position (22) in the virtual space (20), and at that time point a transition animation is presented, in which the object texture on the virtual projection surface (21) transitions into the separate object.

## Revendications

1. Procédé permettant de représenter un environnement (2) d'un véhicule (1), comprenant les étapes consistant à :
- définir une surface de projection virtuelle (21) dans un espace virtuel (20) qui représente l'environnement (2) du véhicule (1),
- texturer la surface de projection virtuelle (21) par une image de caméra qui a été prise par une caméra (3, 4, 5, 6) disposée sur le véhicule (1),
- déterminer une position cible (22) dans l'espace virtuel (20) qui correspond à une position d'objet (7) dans l'environnement (2) du véhicule (1) à laquelle un objet virtuel (23) doit être reproduit sur la représentation de l'environnement (2) du véhicule (1),
- générer une texture d'objet sur la surface de projection virtuelle (21) qui représente l'objet virtuel (23) par une représentation déformée dans laquelle l'objet virtuel (23) présente une déformation correspondante que présente un objet reproduit sur la surface de projection virtuelle (21) lorsqu'il se trouve à la position d'objet (7),
- vérifier si la position cible (22) dans l'espace virtuel (20) se trouve devant ou derrière la surface de projection virtuelle (21), du point de vue de la première caméra virtuelle (24), et
- reproduire la surface de projection virtuelle (21) du point de vue d'une première caméra virtuelle (24), qui est disposée dans l'espace virtuel (20), sur une image de caméra virtuelle (30), l'objet virtuel (23) étant défini comme un objet autonome dans l'espace virtuel (20) si la position cible (22) dans l'espace virtuel (20) se trouve devant la surface de projection virtuelle (21) du point de vue de la première caméra virtuelle (24), l'objet autonome étant reproduit sur l'image de caméra virtuelle (30),
**caractérisé en ce que** lors d'un déplacement de la position cible (22) dans l'espace virtuel (20), un instant est repéré auquel la position cible (22) se trouve sur la surface de projection virtuelle (21), et à cet instant, une animation de transition est représentée dans laquelle la texture d'objet sur la surface de projection virtuelle (21) passe à l'objet autonome.

2. Procédé selon l'une quelconque des revendications précédentes, **caractérisé en ce que** l'objet virtuel (23) est défini à chaque instant comme un objet autonome dans l'espace virtuel (20).

3. Procédé selon l'une quelconque des revendications précédentes, **caractérisé en ce que** lors de la génération de la texture d'objet sur la surface de projection virtuelle (21), l'objet virtuel (23) est défini à la position cible (22) dans l'espace virtuel (20) et il est détecté au moyen d'une deuxième caméra virtuelle (28) afin de générer la texture d'objet, la deuxième caméra virtuelle (28) se trouvant à une Position dans l'espace virtuel (20) qui correspond à une position de la caméra (3, 4, 5, 6) disposée sur le véhicule (1).

4. Procédé selon l'une quelconque des revendications précédentes, **caractérisé en ce qu'**une forme de la surface de projection virtuelle (21) est adaptée à un emplacement d'objets dans l'environnement du véhicule (1) .

5. Procédé selon l'une quelconque des revendications précédentes, **caractérisé en ce que** l'objet virtuel (23) est représenté dans la texture d'objet avec une couleur, un motif et/ou une opacité différents que lorsqu'il est défini comme un objet autonome.

6. Dispositif permettant de représenter un environnement (2) d'un véhicule (1), comprenant :
- une interface de caméra (11) pour recevoir des images de caméra sur une caméra (3, 4, 5, 6) disposée sur le véhicule (1),
- une interface de sortie (12) pour fournir la représentation de l'environnement (2) du véhicule (1) pour un dispositif d'affichage (13), et
- une unité de calcul (10) qui est aménagée pour effectuer les étapes consistant à :
• définir une surface de projection virtuelle (21) dans un espace virtuel (20) qui représente l'environnement (2) du véhicule (1),
• texturer la surface de projection virtuelle (21) par une image de caméra qui a été reçue par l'intermédiaire de l'interface de caméra (11),
• déterminer une position cible (22) dans l'espace virtuel (20) qui correspond à une position d'objet (7) dans l'environnement (2) du véhicule (1) à laquelle un objet virtuel (23) doit être reproduit sur la représentation de l'environnement (2) du véhicule (1),
• générer une texture d'objet sur la surface de projection virtuelle (21) qui représente l'objet virtuel (23) par une représentation déformée dans laquelle l'objet virtuel (23) présente une déformation correspondante que présente un objet reproduit sur la surface de projection virtuelle (21) lorsqu'il se trouve à la position d'objet (7),
• vérifier si la position cible (22) dans l'espace virtuel (20) se trouve devant ou derrière la surface de projection virtuelle (21), du point de vue de la première caméra virtuelle (24), et
• reproduire la surface de projection virtuelle (21) du point de vue d'une première caméra virtuelle (24) qui est disposée dans l'espace virtuel (20) sur une image de caméra virtuelle (30) et fournir l'image de caméra virtuelle (30) à l'interface de sortie (12), l'objet virtuel (23) étant défini comme un objet autonome dans l'espace virtuel (20) si la position cible (22) dans l'espace virtuel (20) se trouve devant la surface de projection virtuelle (21) du point de vue de la première caméra virtuelle (24), l'objet autonome étant reproduit sur l'image de caméra virtuelle (30),
**caractérisé en ce que** lors d'un déplacement de la position cible (22) dans l'espace virtuel (20), un instant est repéré auquel la position cible (22) se trouve sur la surface de projection virtuelle (21), et à cet instant, une animation de transition est représentée dans laquelle la texture d'objet sur la surface de projection virtuelle (21) passe à l'objet autonome.
